# EUROPEAN PATENT APPLICATION

(11) **EP 1 550 496 A1**
(43) Date of publication of application: **06.07.2005**
(21) Application number: 04380234.7
(22) Date of filing: 23.11.2004
(51) Int. Cl.: B01D 61/10, B01D 61/12, E03D 5/10

(54) **Leak protection basin**

(30) Priority: 05.01.2004 ES 200400013
(71) Applicant: Carramolino Fernandez, José, Ciudad Real (ES)
(72) Inventor: Carramolino Fernandez, José, Ciudad Real (ES)
(74) Representative: Naranjo Marcos, Maria Antonia

(57) **Abstract**

Leak protection basin applicable to household water purifying systems, operating as container of minor water leaks and anti-spillage systems consisting of a casing or container and a cover made in polyurethane or similar materials,this leak protection basin becomes a housing for purification machine that performs inverse osmosis and a container in the event of a water leak inside the machine.

## Description

The invention described herein is a leak protection basin for use in household water purification systems as a safety feature which may be used in domestic water purifiers that operate using osmosis systems that require water pressurization and in which leaks tend to be frequent.

This leak protection basin has two functions, to contain possible water leaks and to work as an anti-spillage system by automatically cutting off water flow.

Common household-style purification systems are not equipped with safeties to prevent water spillage or leaks, which usually leads to troublesome or even dangerous results in the event of significant water leaks. The purpose of this invention is to put such inconveniences and problems to an end through the use of the leak protection basin described in this invention.

The following is a summary of the main characteristics and advantages which this systems includes in terms of the previous technique but is merely descriptive and not necessarily complete:
- Ease in manufacturing and assembly
- Contains potential water leaks in household purification systems
- Device equipped with an automatic cut-off system that prevents spills

In order to make it easier to understand this descriptive report, which is not necessarily a complete description, the following drawings or figures have been included:

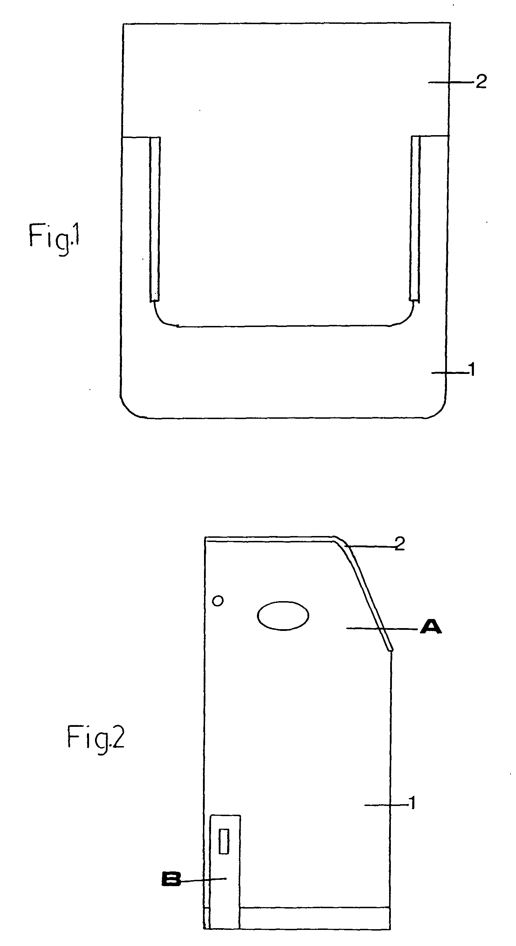

Fig. 1. It shows a view of the front of the leak protection basin.
Fig. 2. It shows a side view of the leak protection basin from the left.

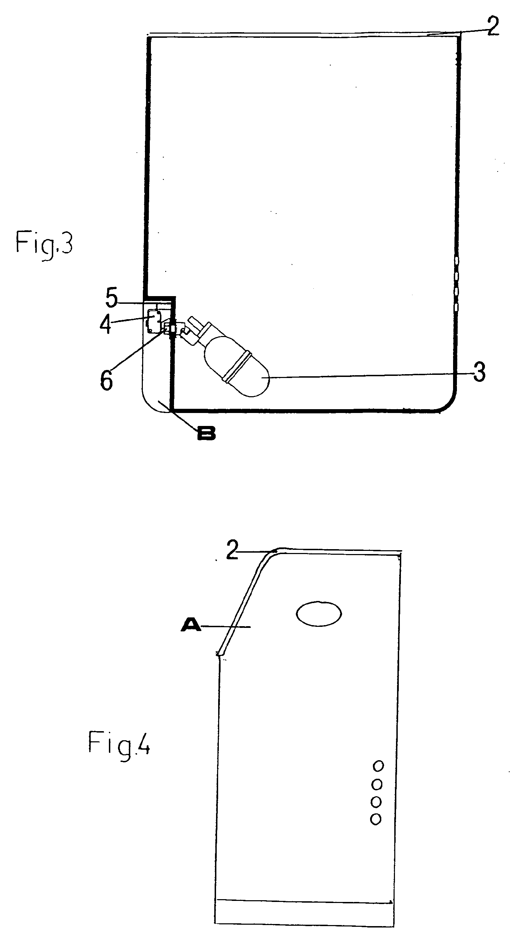

Fig. 3. It shows a B-B cross-section view of the leak protection basin, in which control buoy A inside of the basin can be seen, as well as the buoy control system located outside of the leak protection basin casing.
Fig. 4. It shows a side view of the leak protection basin from the right.

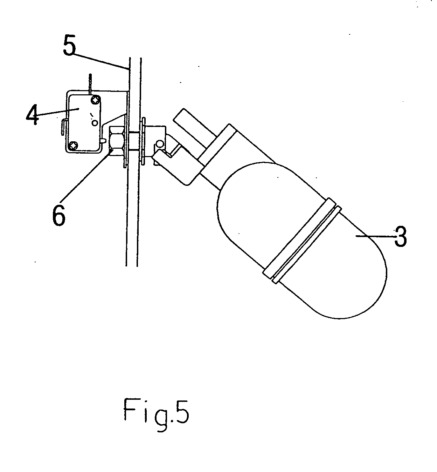

Fig. 5. It shows a detailed view of the electric buoy and its control mechanism placed on the outside of the basin's casing.

In accordance with the attached drawings, the invention consists of a leak protection basin divided into two parts: the casing or container (1) and the cover (2).

The protection basin preferentially has a polyhedral shape and is made out of materials such as polyurethane or another similar material with a thickness of no less than 5 millimeters. Nevertheless, it is possible to use different shapes and materials other than those mentioned herein, as well as different thicknesses without substantially diverging from the purpose of this invention.

The basin has one part made of chamfering (A), which is the part that corresponds to the area of the cover (2) and a lateral notch (B) on the left-hand side, the inside of which houses a buoy (3) that works as a cut-off system in the event of spillage.

On the right-hand side, the basin is equipped with connections (4) for the entrance and exit of water produced using rapid hook-ups.

The basin is also equipped with an electrical wire entry (5) and an entrance (6) for the buoy which shall be on the left-hand side of the basin. The control buoy (3) is to be housed within the casing, whereas its control system (7) is to be placed outside of the casing.

The casing or container which houses the basin is equipped with side handles (not shown) so as to facilitate handling and transport.

The leak protection basin becomes a housing for the purification machine that performs inverse osmosis and a container in the event of a water leak inside the machine.

In cases involving minor water leaks in the purification machine, the basin acts as a collector of the spilled liquid. In cases involving large leaks or continual water leaks, once the inner capacity of the basin has been surpassed, in order to avoid spills, the electric buoy comes into operation (3). On the basis of a regulated position, when that position is reached a signal is given to shut off the electric valve located at the entrance of the water into the purifier, thereby cutting of the water supply and avoiding the entrance of more water into the basin, which could make it overflow.

The buoy is equipped with a micro-controller (7) located outside of the basin, which makes it possible to regulate the height of water at which the buoy emits the signal to cut off the supply of water.

The leak protection basin acts as a container device separate from operation of the inverse osmosis purification system. The leak protection basin is equipped with 4 inlets and/or outlets (4) which make it possible to perform purification. These inlets and outlets are used, respectively, for: hooking up the water from the water supply to the purifier's water inlet and connecting the purifier to the tank located outside of the basin. The two remaining hookups are used as water outlets, one of them connecting the purifier to the outlet pipe for purified water and the second connecting to the drain through which the waste created in the purification process is eliminated.

The purpose of the protection basin described in this invention is to house the purification machine which performs the inverse osmosis process in household water purification systems, as well as acting as a container for spilled water in the event that there are leaks in the machine.

In the event of water leaks from the purifier, the water is collected in the basin, and if this loss is continual, the electric buoy installed, when it reaches a specific position, emits a signal that shuts off an electric valve located at the water inlet of the purifier, thereby cutting off the water supply to the purifier and avoiding any possible spillage.

The buoy is equipped with a micro-controller located outside of the basin that allows for regulation of the water height at which the buoy emits the water supply cut-off signal.

## Claims

1. Leak protection basin **characterized by** consisting of: a casing or container (1) in a polyhedral shape with chamfering (A), a cover (2) in a chamfered form and a left-side notch (B) the inside of which houses the electric buoy (3); it also consists of water inlet and outlet connections (4), an entrance for an electric wire (5), an entrance orifice (6) to house the buoy and a control system (7) for the electrical buoy.

2. Leak protection basin, in accordance with the preceding remark, **characterized by** including water inlet and outlet connections (4) using rapid hook-ups.

3. Leak protection basin, in accordance with the preceding remarks, **characterized by** being equipped with an electrical connection wire inlet (5).

4. Leak protection basin, in accordance with the preceding remarks, **characterized by** being equipped with an electrical buoy placement inlet (6).
